# EUROPÄISCHE PATENTSCHRIFT

(11) **EP 1 134 456 B1**
(45) Veröffentlichungstag und Bekanntmachung des Hinweises auf die Patenterteilung: **29.06.2005**
(21) Anmeldenummer: 01105320.4
(22) Anmeldetag: 07.03.2001
(51) Int. Cl.: F16H 59/02, F16H 59/70, B60K 37/00, F16H 63/42

(54) **Verfahren zur Bestimmung des eingelegten Ganges bei Handschaltgetrieben in Nutzfahrzeugen**
Method for identifying the selected gear in manual compound transmissions for industrial vehicles
Méthode d'affichage de la vitesse sélectionée dans une transmission composée à sélection manuelle pour véhicules industriels

(30) Priorität: 14.03.2000 DE 10012355
(43) Veröffentlichungstag der Anmeldung: 19.09.2001
(73) Patentinhaber: MAN Nutzfahrzeuge Aktiengesellschaft, 80976 München (DE)
(72) Erfinder: Drimml, Peter, Dipl.-Ing., 85757 Karlsfeld (DE); Kozel, Peter, Dipl.-Ing., 85235 Odelzhausen (DE); Eisermann, Günter, 85757 Karlsfeld (DE)

(56) Entgegenhaltungen:
- US-A- 4 199 747
- US-A- 5 416 698
- US-A- 5 904 068

## Beschreibung

Die Erfindung betrifft ein Verfahren nach dem Gegenstand des Anspruches 1.

Ein gattungsgemäßes Verfahren zur Bestimmung des eingelegten Ganges bei Handschaltgetrieben in Nutzfahrzeugen ist aus der US-A-5 904 068 bekannt.

Eine Vorrichtung zur Erkennung des eingelegten Ganges für Nutzfahrzeuge ist aus der DE 33 06 882 A1 bekannt. Der Gegenstand der Anmeldung sind Messfühler, die an den jeweiligen Endlagen von Schaltwellen im Getriebe oder den entsprechenden Getriebegruppen angebracht sind und ein Messsignal erzeugen, wenn sich eine Schaltwelle in einem der Getriebegruppen in einer bestimmten Schaltstellung befindet. Das Signal wird umgesetzt zur Ganganzeige im Fahrerhaus.

Eine solche Vorrichtung ist aus heutiger Sicht nicht mehr machbar, da sie zu teuer und zu anfällig ist, vor allem deshalb, weil die Messfühler im Getriebe angeordnet sein sollen und dadurch mit hohen Temperaturunterschieden beaufschlagt werden.

Eine weitere Vorrichtung dieser Art ist aus der G 90 03 594.1 U1 bekannt. Bei dem Gegenstand dieser Anmeldung ist in einem hohlen Schalthebel ein Kontaktgeber vorgesehen, dem Schaltelemente zugeordnet sind, die, entsprechend der Stellung des Gangschalthebels, betätigbar sind und dabei einen elektrischen Kontakt schließen, mit dem der gerade eingelegte Gang anzeigbar ist. Diese Art der Bestimmung des eingelegten Ganges wäre bei einem Nutzfahrzeug, das bis zu 16 Vorwärtsgänge bzw. 8 Schaltpositionen des Handschalthebels aufweist, ein großer Aufwand.

Der Erfindung liegt die Aufgabe zugrunde, mit einer Einfach-H-Schaltung eines Handschaltgetriebes eines Nutzfahrzeuges, das ein Vielstufengetriebe aufweist, den aktuell eingelegten Gang zu bestimmen.

Die Aufgabe wird erfindungsgemäß durch die Merkmale des Anspruches 1 gelöst.

Dadurch, dass die gerade geschaltete Übersetzung der Baueinheit, Hauptgetriebe und Bereichsgruppe an der Eingangs- und Ausgangswelle dieser Baueinheit bestimmt wird, ist durch den Vergleich der Schaltstufe der aktuell geschalteten Bereichsgruppe, die der Bordrechner kennt und die im Bordrechner abgelegten möglichen Übersetzungen von Hauptgetriebe und Bereichsgruppe, der eingelegte Gang durch den Bordrechner nach einer kurzen Fahrstrecke ermittelbar.

Nutzfahrzeuge, insbesondere schwere Lkws, haben Schaltgetriebe, die meistens entweder 12 oder 16 Gänge haben.

Die Getriebe bestehen aus mehreren Einzelgetrieben, wie Splitgruppe, Bereichsgruppe und Hauptgetriebe, die hintereinander geschaltet sind, aber eine Baueinheit bilden. Mechanische Handschalteinrichtungen haben bei diesen Lkws immer noch einen wesentlich höheren Anteil der Stückzahlen, als automatisch oder "by wire" schaltbare Getriebe.

Weiterhin werden auch noch mechanische, mit Schaltstangen und Doppel-H-Schaltung versehene Schalteinrichtungen gebaut. Bei der Doppel-H-Schaltung ist eine Gangkennung relativ einfach, weil es 8 Schaltpositionen für die Vorwärtsgänge und einen Splitschalter gibt, und somit, wie auch immer, über die Schaltpositionen des Schalthebels und die Stellung des Splitschalters, der eingelegte Gang ermittelbar und anzeigbar ist. Das Schalten mit einer Doppel-H-Schaltung ist für einen Berufsfahrer, noch dazu wenn er immer den gleichen Fahrzeugtyp fährt, überhaupt kein Problem, obwohl die Schaltgassen recht eng aneinander liegen.

Der Fahrzeughersteller möchte jedoch dem Fahrzeugführer immer mehr Komfort bieten und dazu gehört auch, das man von der Doppel-H-Schaltung weggeht, hin zur Einfach-H-Schaltung. Bei der Einfach-H-Schaltung ist zusätzlich im Handschalthebel ein weiterer Schalter für die Bereichsgruppe.

Bei einer derartigen Schalteinrichtung kann der Fahrzeugführer jedoch leicht vergessen, wie Splitschalter und Bereichsgruppenschalter geschaltet sind und damit, welcher Gang eingelegt ist.

Eine Ganganzeige ist deshalb von Vorteil.

Erfindungsgemäß wird das aktuelle Übersetzungsverhältnis von Hauptgetriebe und Bereichsgruppe über Drehzahlsensoren und damit über das Übersetzungsverhältnis n3/n2 bestimmt und in den Bordrechner eingegeben. Im Bordrechner sind alle Übersetzungsverhältnisse von Hauptgetriebe mit Bereichsgruppe abgelegt, die am Ende der Montage (End of Line, EOL) durch einen Code eingegeben werden. Die Übersetzungsverhältnisse unterscheiden sich, abhängig vom Fahrzeugtyp, wie beispielsweise Fernlastzug oder Kipper, und vom Kundenwunsch.

Abhängig nun vom aktuellen Übersetzungsverhältnis von Hauptgetriebe und Bereichsgruppe, das als Messwert der Drehzahl n3 der Getriebeausgangwelle zur Drehzahl n2 der Getriebeeingangswelle dem Bordrechner vorliegt und der aktuell geschalteten Schaltstufe in der Bereichsgruppe als GP-low oder GP-high, kann der Bordrechner den eingelegten Gang ermitteln.

Das aktuelle Übersetzungsverhältnis ist nur ermittelbar, wenn das Fahrzeug wenigstens eine kurze Strecke, z. B. 10 m, gefahren ist.

Die Bestimmung des eingelegten Ganges im Fahrzeugstillstand bei geöffneter Kupplung, z. B. des Wegfahrganges, ist nicht möglich.

Der eingelegte Gang in Form einer Ziffer ist in einem Display am Armaturenbrett anzeigbar.

Weiterhin ist die aktuell geschaltete Bereichsgruppe als beispielsweise dicker waagrechter Balken im genannten Display anzeigbar, wobei GP-low in der linken unteren Ecke und GP-high in der linken oberen Ecke platziert sein kann.

Die Splitganganzeige ist in der Ziffer der Ganganzeige nicht enthalten, d. h., es werden von z. B. 16 Gängen nur 8 Gänge als Ziffer angezeigt.

Die aktuell geschaltete Splitgruppe ist beispielsweise als Dreieck im genannten Display anzeigbar, wobei, wenn auf langsam ("I") geschaltet ist, ein Dreieck im Display unten rechts und wenn auf schnell ("s") geschaltet ist, ein Dreieck im Display oben rechts erscheint.

Wenn eine Vorwählschalteinrichtung vorgesehen ist, kann der Fahrer, abhängig von einem kommenden Fahrereignis, wie beispielsweise Herunterschalten wegen einer Steigung, die absehbar ist, oder Hinaufschalten, weil beschleunigt werden kann, die abgeschätzte Schaltaktion am Splitschalter und/oder Bereichsgruppenschalter vorwählen. In diesen Fällen kann die vorgewählte Splitgruppe (l, s) und/oder die vorgewählte Bereichsgruppe (GP-low, GP-high) Blinkenderweise im Display aufleuchten, wobei die eingelegten Getriebeübersetzungen, l, s, GP-high, GP-low als nichtblinkende Symbole aufgeleuchtet bzw. angezeigt bleiben.

Die Schaltaktion kann der Fahrzeugführer, wenn es nötig ist, mit dem Druckschalter oder Sensorknopf, je nachdem, wie sich die Verkehrssituation ergibt und/oder ob die Zugkraft des Zugwagens ausreicht oder nicht, auslösen oder nicht auslösen.

Löst der Fahrer seinen vorgewählten Wunsch mit Vorwahlschalter aus, so wird der Schaltvorgang automatisch vollzogen und die Symbole für die vorher eingelegten Getriebeübersetzungen erlöschen.

Wenn der Fahrer aus irgendeinem Grund den vorgewählten Schaltvorgang nicht durchführen will oder kann, wird er durch die blinkenden Symbole aufgefordert, den vorgewählten Splitgang und/oder Bereichsgruppengang wieder zurück zu schalten.

Mit dem erfindungsgemäßen Verfahren hat der Fahrer somit eine optimale Sicherheit gegenüber Fehlschaltungen und kann sich wesentlich besser dem Fahrgeschehen widmen.

In der Zeichnung ist ein Ausführungsbeispiel der Erfindung schematisch dargestellt.

Es zeigt:
- Fig. 1: eine Anordnung,
- Fig. 2: den Schalthebel
- Fig. 3: das Display.

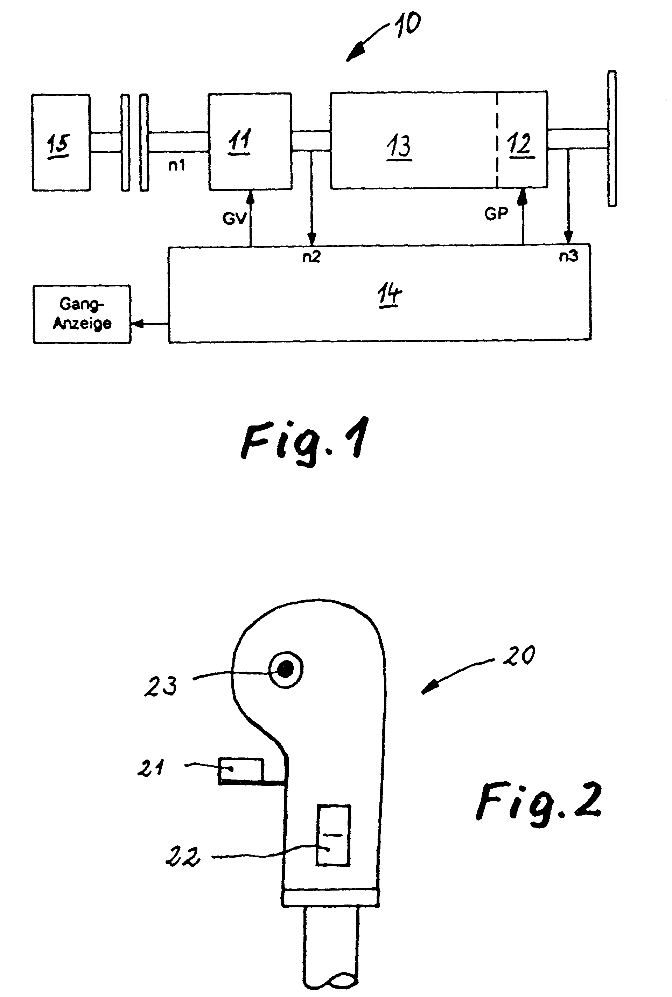

Die Fig. 1 zeigt eine Anordnung 10, wie der eingelegte Gang für ein Handschaltgetriebe mit beispielsweise 12 oder 16 Gängen bei Einfach-H-Stellung bestimmbar ist.

Der Antriebsmotor 15 bzw. Dieselmotor 15 treibt die Getriebevorschaltgruppe 11 mit der Drehzahl n1 an. Das Hauptgetriebe 13 wird mit der Drehzahl n2 angetrieben. Das Übersetzungsverhältnis von Hauptgetriebe 13 und Bereichsgruppe 12 ist der Quotient aus n3 und n2. Die Drehzahlen n2 und n3 werden mit Drehzahlgebern ermittelt.

Der Bordrechner 14 kann durch den Vergleich des Übersetzungsverhältnisses n3/n2 mit dem Übersetzungsverhältnis, das sich aus dem aktuell geschalteten Gang, GP-low oder GP-high in der Bereichsgrupe 12 und den im Bordrechner 14 abgelegten möglichen Übersetzungsverhältnissen von Bereichsgruppe (12) und Hauptgetriebe (13), den aktuell eingelegten Gang ermitteln und zur Anzeige bringen.

Die Fig. 2 zeigt einen Handschalthebel 20. Der Schalter 21 ist für die Splitgruppe 11, der Schalter 22 für die Bereichsgruppe 12 und mit dem Vorwahldruckschalter oder Vorwahlsensor 23 ist ein Schaltvorgang auslösbar bzw. durchführbar.

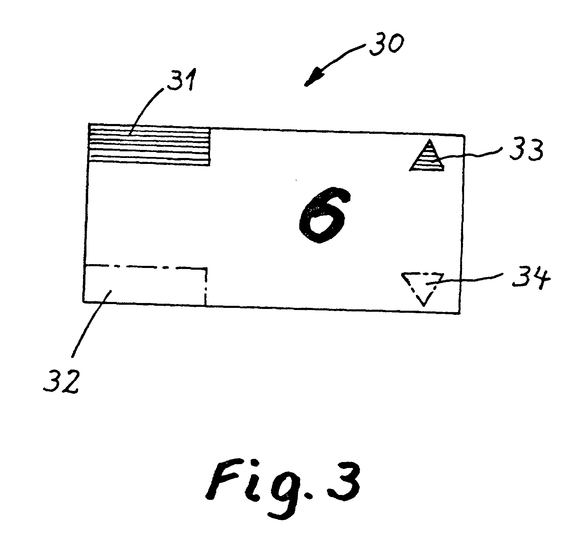

Die Fig. 3 zeigt eine mögliche Ausführung eines Displays 30.

Etwa in der Mitte des Displays ist der aktuell eingelegte Gang angezeigt.
Es werden von beispielsweise 16 Gängen nur 8 Gänge angezeigt, wobei mit der Anzeige der aktuell geschalteten Bereichsgruppe 31, 32 und der geschalteten Splitgruppe 33, 34 eine gute Übersicht über den aktuellen Schaltzustand und die Schaltmöglichkeiten für den Fahrzeugführer geboten ist. Links oben ist ein waagrechter Balken 31 sichtbar, der z. B. bedeutet, dass die GP-high eingelegt ist.

Rechts oben ist ein Dreieck 33 sichtbar, das z. B. bedeutet, dass in der Splitgruppe der schnelle Gang ("s") eingelegt ist.

Wenn eine Vorwahlschalteinrichtung vorhanden ist und eine andere Split- und/oder eine andere Bereichsgruppe gewählt wird, so erscheint z. B. die GP-low als Balken 32 und/oder bei der Splitgruppe das Dreieck 34 blinkend, bis über den Druckschalter 23 oder Sensorknopf vom Fahrzeugführer das Signal zum Auslösen des Schaltvorganges kommt und mit Unterstützung des Bordrechners der Schaltvorgang durchgeführt wird. Wenn der Schaltvorgang durchgeführt ist, erscheinen die entsprechenden Signale andauernd.

Wenn der Schaltvorgang aus irgendeinem Grund nicht durchgeführt wird, wird durch das Blinken der Symbole der Fahrer aufgefordert, die vorgewählte Getriebeumschaltung am Schalter 21 und/oder am Schalter 22 zurück zu nehmen.

Der Fahrer hat somit einen sehr guten Überblick über den Schaltzustand des Gesamtgetriebes.

## Patentansprüche

1. Verfahren zur Bestimmung des eingelegten Ganges bei Handschaltgetrieben in Nutzfahrzeugen, mit einem Getriebe (10), das eine Vorschaltgruppe (11) mit Splitgängen (GV) aufweist, wobei die Splitgänge (GV) über einen Schalter (21) am Schalthebel (20) schaltbar sind, mit einer Bereichsgruppe (12), mit der ein langsamer Bereich GP-low und ein schneller Bereich GP-high mit einem weiteren Schalter (22) am Schalthebel (20) schaltbar ist, mit einem Hauptgetriebe (13), das mit dem Handschalthebel (20) in einer Einfach-H-Schaltung schaltbar ist und mit einem Bordrechner (14), wobei über die Ermittlung des Übersetzungsverhältnisses des Hauptgetriebes (13) einschließlich der Bereichsgruppe (12), die über den Bordrechner (14) eingelegte, aktuelle Schaltstufe der Bereichsgruppe (12), und durch Vergleich mit den im Bordrechner (14) gespeicherten, möglichen Übersetzungen des Hauptgetriebes (13) und der Bereichsgruppe (12), nach kurzer Fahrstrecke der eingelegte Gang von Hauptgetriebe (13) und Bereichsgruppe (12) errechenbar und in einem Display (30) anzeigbar ist und der Schaltzustand von Splitgruppe (11) und Bereichsgruppe (12) in diesem Display (30) separat angezeigt wird.

2. Verfahren nach Anspruch 1, wobei aus dem Übersetzungsverhältnis n3/n2 von Hauptgetriebe (13) und Bereichsgruppe (12) der berechnete Gang als Ziffer im Display (30) angezeigt wird.

3. Verfahren nach Anspruch 1, wobei die Bereichsgruppen GP-low und GP-high und die Splitgänge (GV) im Display (30) als Symbole (31,32,33,34) anzeigbar sind.

4. Verfahren nach den Ansprüchen 1 und 2, wobei, wenn eine Vorwählschalteinrichtung (23) vorhanden ist, die vorgewählte Bereichs- und/oder Splitgruppe durch jeweils ein blinkendes Symbol (31, 32, 33, 34) im Display (30) anzeigbar ist.

5. Verfahren nach Anspruch 1, wobei das eingebaute Hauptgetriebe (13) und die Bereichsgruppe (12) mit seinen möglichen Übersetzungen in einem Code, der in der Endmontage eingegeben wird, enthalten ist.

## Claims

1. Procedure for ascertaining the gear engaged in manual gearboxes in commercial vehicles with a gearbox (10) with a front-mounted splitter box (11) with splitter gears (GV), whereby the splitter gears (GV) can be shifted via a switch (21) on the gear lever (20), with a range-change group (12) with which a slow range (GP-low) and a fast range (GP-high) can be shifted by means of a further switch (22) on the gear lever (20), with a main gearbox (13) which can be shifted with the manual gear lever (20) in a single-H gearshift pattern and with an on-board computer (14), **characterised in that** the current shifting position, engaged via the on-board computer (14), of the range-change group (12) can be calculated and indicated in a display (30) by means of ascertaining the transmission ratio of the main gearbox (13) including that of the range-change group (12) and the gear engaged in the main gearbox (13) and the range-change group (12) can, after the vehicle has travelled a short distance, be calculated and indicated in a display (30) by means of a comparison with the possible transmission ratios, stored in the on-board computer (14), of the main gearbox (13) and the range-change group (12) and the shifting condition of the splitter group (11) and of the range-change group (12) is separatedly indicated in said display (30).

2. Procedure according to Claim 1, **characterised in that** the gear calculated from the transmission ratio n3/n2 in the main gearbox (13) and in the range-change group (12) is indicated as a figure in the display (30).

3. Procedure according to Claim 1, **characterised in that** the range-change groups GP-low and GP-high and the splitter gears (GV) can be indicated as symbols (31, 32, 33, 34) in the display (30).

4. Procedure according to the Claims 1 and 2, **characterised in that** if a preselector device (23) is present the preselected range-change and/or splitter box can each be indicated in the form of a flashing symbol (31, 32, 33, 34) in the display (30).

5. Procedure according to Claim 1, **characterised in that** the installed main gearbox (13) and the range-change group (12) with their possible transmission ratios are contained in a code entered in the course of final assembly.

## Revendications

1. Procédé de détermination de la vitesse enclenchée sur boîte de vitesses manuelle de véhicule utilitaire, comportant une boîte (10) précédée d'un médiateur (11) aux demi-vitesses (GV) sélectionnables par l'intermédiaire d'un commutateur (21) disposé sur le levier de vitesse (20), un doubleur (12) permettant d'obtenir une gamme lente GP-low et une gamme rapide GP-high et commandable par un autre commutateur (22) disposé sur le levier de vitesse (20), une boîte principale (13) commandable manuellement par le levier de vitesse (20) dans une grille en H simple, et un ordinateur de bord, **caractérisé en ce que**, par détermination du rapport de la boîte principale (13), doubleur (12) compris, la gamme du doubleur (12) momentanément sélectionnée par l'ordinateur de bord (14) et, par comparaison avec les rapports possibles de la boîte principale (13) et du doubleur (12) enregistrés dans l'ordinateur de bord (14), la vitesse enclenchée sur la boîte principale (13) et le doubleur (12) sont affichables sur un écran (30) au bout d'une courte distance et que l'état sélectionné sur le médiateur (11) et le doubleur (12) sont affichés sur cet écran (30).

2. Procédé selon la revendication 1, **caractérisé en ce que** la vitesse calculée à partir du rapport n3/n2 de la boîte principale (13) et du doubleur (12) est affichée à l'écran (30).

3. Procédé selon la revendication 1, **caractérisé en ce que** les gammes GP-low et GP-high et les demi-vitesses (GV) sont affichables à l'écran (30) sous forme de symboles (31, 32, 33, 34).

4. Procédé selon les revendications 1 et 2, **caractérisé en ce que**, lorsqu'il existe un pré-sélecteur (23), la gamme et/ou la demi-vitesse présélectionnées sont respectivement affichables à l'écran (30) sous la forme d'un symbole clignotant (31, 32, 33, 34).

5. Procédé selon la revendication 1, **caractérisé en ce que** la boîte principale (13) et le doubleur (12) montés sur le véhicule sont spécifiés, avec leurs rapports possibles, dans un code entré à l'assemblage final.
